# EUROPEAN PATENT APPLICATION

(11) **EP 4 043 311 A2**
(43) Date of publication of application: **17.08.2022**
(21) Application number: 22180112.9
(22) Date of filing: 21.06.2022
(51) Int. Cl.: B60W 60/00

(54) **METHOD AND APPARATUS OF ADJUSTING DRIVING STRATEGY FOR DRIVERLESS VEHICLE, DEVICE, AND STORAGE MEDIUM**

(30) Priority: 25.06.2021 CN 202110715785
(71) Applicant: Apollo Intelligent Connectivity (Beijing) Technology Co., Ltd., Beijing 100176 (CN)
(72) Inventor: Li, Liping, Beijing, 100176 (CN)
(74) Representative: Hoffmann Eitle

(57) **Abstract**

A method of adjusting a driving strategy for a driverless vehicle is provided, which relates to a field of artificial intelligence, in particular to autonomous driving, cloud computing, NLP, computer vision and other fields, and may be applied to an interaction scene between a driverless vehicle and a pedestrian. A specific implementation solution includes: detecting an emotion of at least one pedestrian in response to the at least one pedestrian being detected within a preset range in front of the driverless vehicle; and adjusting a current driving strategy for the driverless vehicle based on a specified emotion in response to detecting that the at least one pedestrian includes a target pedestrian exhibiting the specified emotion.

## Description

### TECHNICAL FIELD

The present disclosure relates to a field of artificial intelligence, in particular to autonomous driving, cloud computing, NLP, computer vision and other fields, and may be applied to an interaction scene between a driverless vehicle and a pedestrian. Specifically, the present disclosure relates to a method and an apparatus of adjusting a driving strategy for a driverless vehicle, a device, and a storage medium.

### BACKGROUND

Compared with an autonomous vehicle (a driverless vehicle), a real driver may communicate effectively with a pedestrian when driving. Research shows that the pedestrian and the driver may make an eye contact from a distance of 20 meters during a vehicle driving.

### SUMMARY

The present disclosure provides a method and an apparatus of adjusting a driving strategy for a driverless vehicle, a device, a storage medium, and a computer program product.

According to an aspect of the present disclosure, there is provided a method of adjusting a driving strategy for a driverless vehicle, including: detecting an emotion of at least one pedestrian in response to the at least one pedestrian being detected within a preset range in front of the driverless vehicle; and adjusting a current driving strategy for the driverless vehicle based on a specified emotion in response to detecting that the at least one pedestrian includes a target pedestrian exhibiting the specified emotion.

According to another aspect of the present disclosure, there is provided an apparatus of adjusting a driving strategy for a driverless vehicle, including: a first detection module configured to detect an emotion of at least one pedestrian in response to the at least one pedestrian being detected within a preset range in front of the driverless vehicle; and an adjustment module configured to adjust a current driving strategy for the driverless vehicle based on a specified emotion in response to detecting that the at least one pedestrian includes a target pedestrian exhibiting the specified emotion.

According to another aspect of the present disclosure, there is provided an electronic device, including: at least one processor; and a memory communicatively connected to the at least one processor, wherein the memory stores instructions executable by the at least one processor, and the instructions, when executed by the at least one processor, cause the at least one processor to implement the method described in the embodiments of the present disclosure.

According to another aspect of the present disclosure, there is provided a non-transitory computer-readable storage medium having computer instructions stored thereon, wherein the computer instructions allow a computer to implement the method described in the embodiments of the present disclosure.

According to another aspect of the present disclosure, there is provided a computer program product containing a computer program, wherein the computer program, when executed by a processor, is allowed to implement the method described in the embodiments of the present disclosure.

It should be understood that content described in this section is not intended to identify key or important features in the embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used to better understand the solution and do not constitute a limitation to the present disclosure.
FIG. 1 schematically shows a system architecture suitable for the embodiments of the present disclosure.
FIG. 2 schematically shows a flowchart of a method of adjusting a driving strategy for a driverless vehicle according to the embodiments of the present disclosure.
FIG. 3 schematically shows a schematic diagram of a driverless vehicle avoiding a pedestrian according to the embodiments of the present disclosure.
FIG. 4 schematically shows a block diagram of an apparatus of adjusting a driving strategy for a driverless vehicle according to the embodiments of the present disclosure.
FIG. 5 schematically shows a block diagram of an electronic device for implementing the method of the embodiments of the present disclosure.

### DETAILED DESCRIPTION OF EMBODIMENTS

The following describes exemplary embodiments of the present disclosure with reference to the accompanying drawings, which include various details of the embodiments of the present disclosure to facilitate understanding, and should be considered as merely exemplary. Therefore, those of ordinary skilled in the art should realize that various changes and modifications may be made to the embodiments described herein without departing from the scope and spirit of the present disclosure. Likewise, for clarity and conciseness, descriptions of well-known functions and structures are omitted in the following description.

At present, an autonomous vehicle lacks a communication strategy with a pedestrian. As a result, if an autonomous driving strategy is too conservative, a vehicle traffic efficiency may be reduced and a passenger and the pedestrian may feel anxious; and if the autonomous driving strategy is too radical, the passenger and the pedestrian may feel afraid.

In order to solve the above technical problems, the following solution is provided in a related art. As long as the driverless vehicle detects a zebra crossing and a pedestrian, a prompt may be displayed on an external screen of the vehicle to indicate the pedestrian to go first.

It may be understood that the solution may not be used in a zebra crossing free section. In addition, the solution does not provide any comforting measure for the pedestrian who does not intend to cross the road but feels a threat of the vehicle.

In this regard, the embodiments of the present disclosure provide a solution for the driverless vehicle, in which a feeling of the pedestrian may be used as a variable for adjusting a driving strategy for the driverless vehicle. For example, an emotion of the pedestrian may be identified through image data captured by an external camera and data reported by a personal wearable device, and the driving strategy for the driverless vehicle may be adjusted based on the emotion of the pedestrian. Therefore, in the embodiments of the present disclosure, the passenger on the autonomous vehicle and the pedestrian in contact with the vehicle may have a better feeling.

The present disclosure will be described in detail below in combination with specific embodiments.

A system architecture of a method and an apparatus of adjusting a driving strategy for a driverless vehicle suitable for the embodiments of the present disclosure is introduced as follows.

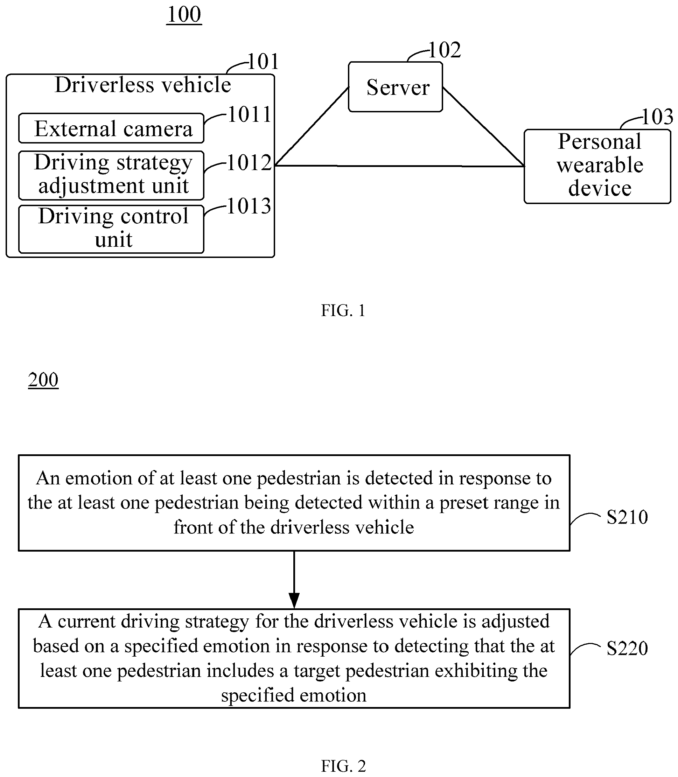

FIG. 1 schematically shows a system architecture suitable for the embodiments of the present disclosure. It should be noted that FIG. 1 is only an example of the system architecture to which the embodiments of the present disclosure may be applied to help those skilled in the art understand the technical content of the present disclosure, but it does not mean that the embodiments of the present disclosure may not be used in other environments or scenarios.

As shown in FIG. 1, a system architecture 100 may include a driverless vehicle 101, a server 102, and a personal wearable device 103. The driverless vehicle 101 may include an external camera 1011, a driving strategy adjustment unit 1012, and a driving control unit 1013.

The external camera 1011 is used to capture image data during a driving of the driverless vehicle 101. Through the image data captured by the external camera 1011, a relative position between the pedestrian and the vehicle, whether the pedestrian's line of sight falls on a vehicle body, whether the pedestrian has a visual impairment, and the pedestrian's emotion may be determined.

The personal wearable device 103 worn by the pedestrian may report index data of the pedestrian, such as a heart rate, a pupil, a facial expression, a bioelectricity, etc. in the form of FM broadcast. Through the index data, the emotion or feeling of the pedestrian may be determined.

In some embodiments of the present disclosure, the external camera 1011 and the personal wearable device 103 may directly report the data to the driverless vehicle 101, and the driverless vehicle 101 may determine the emotion of the pedestrian through a data analysis. Then, the driving strategy adjustment unit 1012 may adjust the driving strategy for the driverless vehicle according to a pedestrian emotion determination result. Next, the driving control unit 1013 may execute an adjusted driving strategy. For example, if the pedestrian is found to be afraid and a speed of the vehicle is not less than a system minimum speed limit of a current road section, the driverless vehicle may decelerate, and change lanes to a side away from the pedestrian at the same time.

In other embodiments of the present disclosure, the external camera 1011 and the personal wearable device 103 may also report the data to the server 102, and the server 102 may determine the emotion of the pedestrian through a data analysis. Then, the server 102 may transmit the pedestrian emotion determination result to the driverless vehicle 101. Next, the driverless vehicle 101 may adjust the driving strategy for the driverless vehicle through the driving strategy adjustment unit 1012 according to the pedestrian emotion determination result. Then, the driving control unit 1013 may execute the adjusted driving strategy.

It should be noted that in the embodiments of the present disclosure, corresponding driving strategies for the driverless vehicle may be preset according to different pedestrian emotions. The pedestrian emotions may include a plurality of categories. For example, the pedestrian emotions may include the pedestrian having no special feeling, the pedestrian feeling afraid, and the pedestrian feeling anxious. Exemplarily, if the pedestrian has no special feeling, a default driving strategy may be executed continuously; if the pedestrian feels afraid, the vehicle may change lanes to a side away from the pedestrian, or may change lanes to the side away from the pedestrian and decelerate; if the pedestrian feels anxious, the vehicle may accelerate to pass, or stop and signal the pedestrian to go first according to the situation.

In addition, in the embodiments of the present disclosure, the server 102 may be a cloud server.

It should be understood that the number of driverless vehicle, server and personal wearable device in FIG. 1 is only schematic. The system architecture may include any number of driverless vehicle, server and personal wearable device according to implementation needs.

An application scenario of the method and the apparatus of adjusting the driving strategy for the driverless vehicle suitable for the embodiments of the present disclosure is introduced as follows.

It should be noted that a driving solution for the driverless vehicle provided by the embodiments of the present disclosure may be applied not only to a road section with a zebra crossing, but also to a road section without a zebra crossing.

According to the embodiments of the present disclosure, the present disclosure provides a method of adjusting a driving strategy for a driverless vehicle.

FIG. 2 schematically shows a flowchart of the method of adjusting the driving strategy for the driverless vehicle according to the embodiments of the present disclosure.

As shown in FIG. 2, a method 200 of adjusting the driving strategy for the driverless vehicle may include operation S210 to operation S220.

In operation S210, an emotion of at least one pedestrian is detected in response to the at least one pedestrian being detected within a preset range in front of the driverless vehicle.

In operation S220, a current driving strategy for the driverless vehicle is adjusted based on a specified emotion in response to detecting that the at least one pedestrian includes a target pedestrian exhibiting the specified emotion.

In some embodiments of the present disclosure, during a driving of the driverless vehicle, the driverless vehicle may detect through an infrared detector whether an organism exists in a preset range (e.g. within 20 meters) in front of the vehicle. When an organism is detected within the preset range in front of the vehicle, image data may be captured through an external camera, and whether the organism is a pedestrian may be determined according to the captured image data. And when it is determined that the organism is a pedestrian, the captured image data is matched with a pedestrian emotion (such as a size of pupil, etc.) in a library to determine whether a current emotion of the pedestrian in front of the vehicle is a preset specified emotion (such as feeling afraid, feeling anxious, etc.). When it is determined that the current emotion of the pedestrian in front of the vehicle is the preset specified emotion, a current driving strategy for the driverless vehicle is adjusted to a preset driving strategy for the specified emotion. For example, if the pedestrian feels afraid, the vehicle may change lanes to a side away from the pedestrian, or change lanes to the side away from the pedestrian and decelerate. If the pedestrian feels anxious, the vehicle may accelerate to pass, or stop and signal the pedestrian to go first according to the situation. In addition, if the pedestrian has no special feeling, the vehicle may continue to execute a default driving strategy, that is, the driving strategy for the vehicle is not adjusted.

In other embodiments of the present disclosure, if the driverless vehicle receives data reported by the personal wearable device during driving, it is considered that a pedestrian exists within a preset range (e.g. within 20 meters) in front of the vehicle. In this case, image data may be captured through the external camera, and the captured image data may be matched with the pedestrian emotion in the library to determine whether the current emotion of the pedestrian in front of the vehicle is the preset specified emotion (such as feeling afraid, feeling anxious, etc.). When it is determined that the current emotion of the pedestrian in front of the vehicle is the preset specified emotion, the current driving strategy for the driverless vehicle is adjusted to the preset driving strategy for the specified emotion.

Alternatively, in the embodiments of the present disclosure, in addition to determining the emotion of the pedestrian according to the image data captured by the external camera, the emotion of the pedestrian may also be determined according to the data reported by the personal wearable device. Alternatively, the emotion of the pedestrian may be determined according to both the data reported by the personal wearable device and the image data captured by the external camera.

It should be understood that in the embodiments of the present disclosure, data uploaded by the personal wearable device may include but is not limited to one or more of a face expression, a heart rate, a bioelectricity, a self-evaluation, and other information of a user.

Exemplarily, understanding the current emotion of the pedestrian through a heart rate value reported by the personal wearable device may include following steps: acquiring a heart rate value of the pedestrian, determining a data range of the heart rate value, and determining the emotion of the pedestrian, such as feeling afraid, feeling anxious or no feeling, according to the data range of the heart rate value.

It should be understood that under normal circumstances, if the pedestrian (e.g., a parent with a child or an elderly person with reduced mobility) feels afraid of vehicle approaching, the driverless vehicle needs to decelerate and change lanes in order to avoid the pedestrian. Alternatively, under normal circumstances, if the pedestrian feels anxious (such as crossing a road in a hurry), the driverless vehicle may be controlled to accelerate to pass, or stop and signal the pedestrian to go first according to the situation.

Through the embodiments of the present disclosure, during the driving of the driverless vehicle, the driverless vehicle may adjust the driving strategy for the vehicle according to the emotion of the pedestrian, which has a higher intelligent level, so that a traffic efficiency of the vehicle may be improved, and the driverless vehicle may be avoided from threatening a safety of the pedestrian. In addition, for a pedestrian who does not intend or is not in a hurry to cross the road, a comforting measure (changing lanes, staying away from the pedestrian, slowing down, etc.) may be taken to comfort the emotion of the pedestrian and avoid a safety risk.

As an alternative embodiment, the method further includes: before adjusting the current driving strategy for the driverless vehicle based on the specified emotion, detecting whether the target pedestrian is watching the driverless vehicle. An operation of adjusting the current driving strategy for the driverless vehicle based on the specified emotion is performed in response to detecting that the target pedestrian is watching the driverless vehicle.

It should be understood that in the embodiments of the present disclosure, if the pedestrian is watching the driverless vehicle and exhibits the specified emotion, it is considered that the specified emotion of the pedestrian is caused by the driverless vehicle. In this case, the current driving strategy for the driverless vehicle may be adjusted based on the emotion of the pedestrian. Alternatively, if the pedestrian only exhibits the specified emotion but is not watching the driverless vehicle, it is considered that the specified emotion of the pedestrian is not caused by the driverless vehicle, and may be caused by other environmental factors. In this case, the current driving strategy for the driverless vehicle may not be adjusted, and the default driving strategy may be continuously executed.

Exemplarily, a pupil position of the pedestrian may be tracked according to the image data captured by the driverless vehicle and/or the data reported by the personal wearable device. In an embodiment, when a straight-line 3° angle of view of the pedestrian pupil may cover a front window of the driverless vehicle, it is considered that the pedestrian is watching the vehicle. Otherwise, it is considered that the pedestrian is not watching the vehicle.

Through the embodiments of the present disclosure, the driving strategy may be adjusted only when the pedestrian feels afraid or anxious due to the driverless vehicle, while the driving strategy may be continuously executed, that is, may be not adjusted, when the pedestrian feels afraid or anxious due to other environmental factors. In this way, the safety risk may be avoided, and the traffic efficiency of the driverless vehicle may be improved.

As an alternative embodiment, the method further includes: detecting whether the target pedestrian is a visually impaired person in response to detecting that the target pedestrian is not watching the driverless vehicle. The operation of adjusting the current driving strategy for the driverless vehicle based on the specified emotion is performed in response to detecting that the target pedestrian is a visually impaired person.

It should be understood that in the embodiments of the present disclosure, if the pedestrian is watching the driverless vehicle and exhibits the specified emotion, it is considered that the specified emotion of the pedestrian is caused by the driverless vehicle. In this case, the current driving strategy for the driverless vehicle may be adjusted based on the emotion of the pedestrian.

However, in the embodiments of the present disclosure, the pedestrian may exhibit the specified emotion without watching the driverless vehicle. If it is directly considered that the specified emotion of the pedestrian is not caused by the driverless vehicle, a safety accident may occur due to a misjudgment, because under a special circumstance, for example, when the pedestrian has a visual impairment, the pedestrian may be unable to watch the vehicle due to a congenital obstacle even if the specified emotion of the pedestrian is caused by the driverless vehicle.

Therefore, in this case, it may be first determined whether the pedestrian is a visually impaired person. When it is determined that the pedestrian is a visually impaired person, it may be decided to adjust the current driving strategy for the driverless vehicle. When it is determined that the pedestrian is not a visually impaired person, it may be decided to continuously execute the default driving strategy.

Exemplarily, the image data captured by the driverless vehicle may be compared with image data in the library to determine whether the pedestrian has a visual impairment. Alternatively, whether the pedestrian has a visual impairment may be determined according to the pedestrian's personal information (such as whether the pedestrian has a visual impairment or not, etc.) reported by the personal wearable device. It should be noted that personal wearable device may report data through FM broadcasting.

According to the embodiments of the present disclosure, when it is found that the pedestrian exhibits the specified emotion and is not watching the driverless vehicle, a visual state of the pedestrian may be checked first to determine whether the pedestrian is a visually impaired person, and then it may be decided whether to adjust the driving strategy. In this way, the safety risk may be avoided, and the traffic efficiency of the driverless vehicle may be improved.

As an alternative embodiment, adjusting the current driving strategy for the driverless vehicle based on the specified emotion includes at least one of the following cases.

When the specified emotion indicates that the target pedestrian feels afraid of the driverless vehicle, the driverless vehicle is controlled to change lanes to the side away from the target pedestrian.

When the specified emotion indicates that the target pedestrian feels anxious, the driverless vehicle is controlled to accelerate to pass, or stop and signal the pedestrian to go first.

It should be understood that in some cases, the pedestrian may have no idea of crossing the road or crossing the road in a hurry, but in such cases, the pedestrian may also feel afraid of the vehicle approaching. Therefore, in such cases, the driverless vehicle may be controlled to change lanes to the side away from the target pedestrian at an original speed or a reduced speed according to the situation (for example, according to the current speed of the driverless vehicle).

Further, as an alternative embodiment, controlling the driverless vehicle to change lanes to the side away from the target pedestrian includes at least one of the following cases.

When a speed of the driverless vehicle is equal to a minimum speed limit (including a road minimum speed limit and/or a system minimum speed limit), the driverless vehicle is only controlled to change lanes to the side away from the target pedestrian.

When the speed of the driverless vehicle is greater than the minimum speed limit, the driverless vehicle is controlled to decelerate and change lanes to the side away from the target pedestrian.

As an alternative embodiment, controlling the driverless vehicle to accelerate to pass, or controlling the driverless vehicle to stop and signal the pedestrian to go first may include the following cases.

When the speed of the driverless vehicle is less than a maximum speed limit (including a road maximum speed limit and/or a system maximum speed limit), the driverless vehicle is controlled to accelerate to pass.

Alternatively, when the speed of the driverless vehicle is equal to the maximum speed limit, the driverless vehicle is controlled to stop and signal the pedestrian to go first.

It should be noted that in the embodiments of the present disclosure, if a plurality of pedestrians exist within the preset range in front of the vehicle, and the plurality of pedestrians include both pedestrian feeling afraid of driverless vehicle approaching and pedestrian feeling anxious, a driving strategy adjustment measure may be made preferentially for the pedestrian feeling afraid.

In addition, in the embodiments of the present disclosure, when a plurality of pedestrians having the same emotion exist within the preset range in front of the vehicle, the driving strategy adjustment measure may be made based on a pedestrian with a greatest emotional response.

In addition, it should be understood that when changing lanes to the side away from the pedestrian, the driverless vehicle needs to drive to an available lane without affecting driving of other vehicles. If these conditions are not met, the driverless vehicle may drive close to a lane line away from the pedestrian.

In addition, it should be understood that in the embodiments of the present disclosure, in signaling the pedestrian to go first, an intention may be displayed by means of an external screen, a speaker broadcasting, or pushing a message to the personal wearable device.

As an alternative embodiment, detecting the emotion of the at least one pedestrian may include detecting the emotion of the at least one pedestrian based on the image data captured by the driverless vehicle and/or the data reported by the personal wearable device of the at least one pedestrian.

It should be noted that in the embodiments of the present disclosure, the method of detecting the emotion of the pedestrian based on the image data captured by the driverless vehicle and/or the data reported by the personal wearable device may refer to the relevant description in the aforementioned embodiments, which will not be repeated here in the embodiments of the present disclosure.

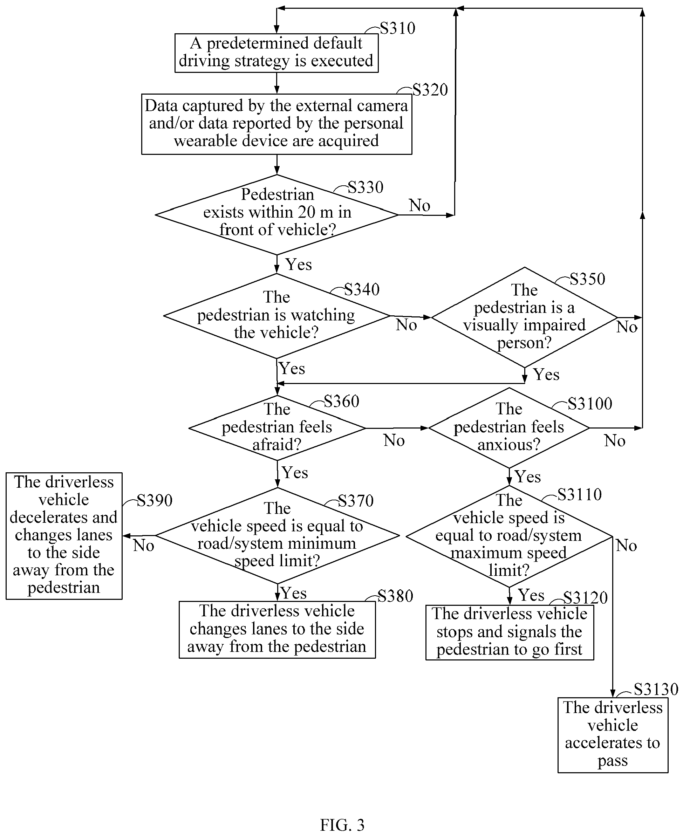

A principle of the driverless vehicle avoiding the pedestrian in the present disclosure will be described in details below in combination with FIG. 3 and specific embodiments.

As shown in FIG. 3, the driverless vehicle may perform following operations to comfort or give way to the pedestrian during driving.

**In** operation S310, a predetermined default driving strategy is executed.

**In** operation S320, data captured by the external camera and/or data reported by the personal wearable device are acquired.

**In** operation S330, it is determined whether a pedestrian exists within 20 meters in front of the driverless vehicle based on the data acquired in operation S320. If so, operation S340 is performed; otherwise, the process skips to operation S310.

In operation S340, it is determined whether the pedestrian is watching the vehicle. If the pedestrian is watching the vehicle, operation S360 is performed; otherwise, operation S350 is performed.

**In** operation S350, it is determined whether the pedestrian is a visually impaired person. If the pedestrian is a visually impaired person, operation S360 is performed; otherwise, the process skips to operation S310.

In operation S360, it is detected whether the pedestrian feels afraid. If the pedestrian feels afraid, operation S370 is performed; otherwise, operation S3100 is performed.

In operation S370, it is determined whether the vehicle speed is equal to a road/system minimum speed limit. If so, operation S380 is performed; otherwise, operation S390 is performed.

In operation S380, the driverless vehicle changes lanes to the side away from the pedestrian.

In operation S390, the driverless vehicle decelerates and changes lanes to the side away from the pedestrian.

In operation S3100, it is detected whether the pedestrian feels anxious. If the pedestrian feels anxious, operation S3110 is performed; otherwise, the process skips to operation S310.

In operation S3110, it is determined whether the vehicle speed is equal to a road/system maximum speed limit. If so, operation S3120 is performed; otherwise, operation S3130 is performed.

In operation S3120, the driverless vehicle stops and signals the pedestrian to go first.

In operation S3130, the driverless vehicle accelerates to pass.

According to the embodiments of the present disclosure, the present disclosure further provides an apparatus of adjusting a driving strategy for a driverless vehicle.

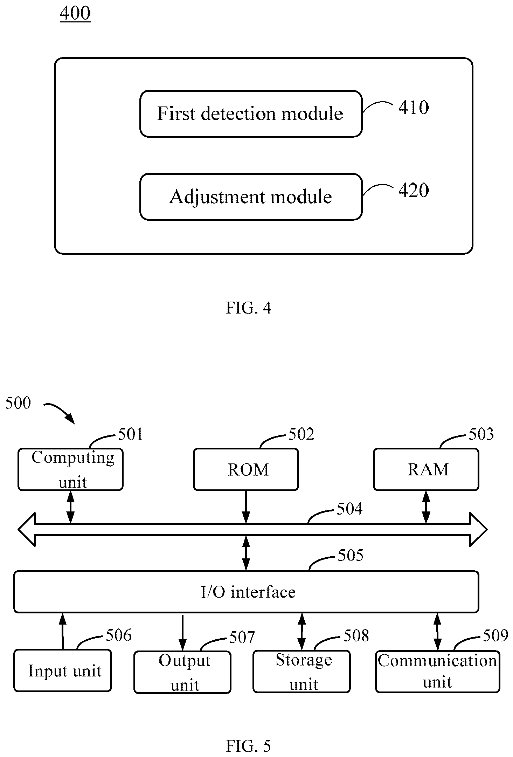

FIG. 4 shows a block diagram of the apparatus of adjusting the driving strategy for the driverless vehicle according to the embodiments of the present disclosure.

As shown in FIG. 4, an apparatus 400 of adjusting a driving strategy for a driverless vehicle may include a first detection module 410 and an adjustment module 420.

The first detection module 410 is used to detect an emotion of at least one pedestrian in response to the at least one pedestrian being detected within a preset range in front of the driverless vehicle.

The adjustment module 420 is used to adjust a current driving strategy for the driverless vehicle based on a specified emotion in response to detecting that the at least one pedestrian includes a target pedestrian exhibiting the specified emotion.

As an alternative embodiment, the apparatus further includes a second detection module used to detect whether the target pedestrian is watching the driverless vehicle before the current driving strategy for the driverless vehicle is adjusted by the adjustment module based on the specified emotion. The operation of adjusting the current driving strategy for the driverless vehicle is performed by the adjustment module based on the specified emotion in response to the second detection module detecting that the target pedestrian is watching the driverless vehicle.

As an alternative embodiment, the apparatus further includes a third detection module used to detect whether the target pedestrian is a visually impaired person in response to the second detection module detecting that the target pedestrian is not watching the driverless vehicle. The operation of adjusting the current driving strategy for the driverless vehicle is performed by the adjustment module based on the specified emotion in response to the third detection module detecting that the target pedestrian is a visually impaired person.

As an alternative embodiment, the adjustment module is used to perform a corresponding operation through at least one of: a first control unit used to control the driverless vehicle to change lanes to the side away from the target pedestrian when the specified emotion indicates that the target pedestrian feels afraid of the driverless vehicle; or a second control unit used to control the driverless vehicle to accelerate to pass or control the driverless vehicle to stop and signal the pedestrian to go first when the specified emotion indicates that the target pedestrian feels anxious.

As an alternative embodiment, the first control unit is used to perform at least one of: controlling the driverless vehicle to change lanes to the side away from the target pedestrian only, when the speed of the driverless vehicle is equal to the minimum speed limit; or controlling the driverless vehicle to decelerate and change lanes to the side away from the target pedestrian when the speed of the driverless vehicle is greater than the minimum speed limit.

As an alternative embodiment, the second control unit is further used to: control the driverless vehicle to accelerate to pass when the speed of the driverless vehicle is less than the maximum speed limit; or control the driverless vehicle to stop and signal the pedestrian to go first when the speed of the driverless vehicle is equal to the maximum speed limit.

As an alternative embodiment, the first detection module is further used to detect the emotion of the at least one pedestrian based on the image data captured by the driverless vehicle and/or the data reported by the personal wearable device of the at least one pedestrian.

It should be understood that the embodiments of the apparatus of the present disclosure are correspondingly identical with or similar to the embodiments of the method of the present disclosure, as well as the technical problems solved and the functions achieved, which will not be repeated here.

According to the embodiments of the present disclosure, the present disclosure further provides an electronic device, a readable storage medium and a computer program product.

FIG. 5 shows a schematic block diagram of an example electronic device 500 for implementing the embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 5, the electronic device 500 includes a computing unit 501 that may perform various appropriate actions and processing according to a computer program stored in a read-only memory (ROM) 502 or a computer program loaded from a storage unit 508 into a random-access memory (RAM) 503. In the RAM 503, various programs and data required for an operation of electronic device 500 may also be stored. The computing unit 501, the ROM 502 and the RAM 503 are connected to each other through a bus 504. The input/output (I/O) interface 505 is also connected to the bus 504.

A plurality of components in the electronic device 500 connected to the I/O interface 505, includes: an input unit 506, such as a keyboard, a mouse, etc.; an output unit 507, such as various types of displays, speakers, etc.; a storage unit 508, such as a magnetic disk, an optical disk, etc.; and a communication unit 509, such as a network card, a modem, a wireless communication transceiver, etc. The communication unit 509 allows the apparatus 500 to exchange information/data with other devices through computer networks such as the Internet and/or various telecommunication networks.

The computing unit 501 may be various general-purpose and/or dedicated-purpose processing components with processing and computing capabilities. Some examples of the computing unit 501 include, but are not limited to, a central processing unit (CPU), a graphics processing unit (GPU), various dedicated artificial intelligence (AI) computing chips, various computing units running machine learning model algorithms, a digital signal processor (DSP), and any appropriate processors, controllers, microcontrollers, etc. The computing unit 501 performs various methods and processing described above, such as the method of adjusting the driving strategy for the driverless vehicle. For example, in some embodiments, the method of adjusting the driving strategy for the driverless vehicle may be implemented as a computer software program, which is tangibly contained in a machine-readable medium, such as the storage unit 508. In some embodiments, a part of or all of the computer program may be loaded and/or installed on the apparatus 500 via the ROM 502 and/or the communication unit 509. When the computer program is loaded into the RAM 503 and executed by the computing unit 501, one or more steps of the method of adjusting the driving strategy for the driverless vehicle described above may be performed. Alternatively, in other embodiments, the computing unit 501 may be configured to perform the method of adjusting the driving strategy for the driverless vehicle by any other appropriate means (e.g., by means of a firmware).

Various embodiments of the systems and technologies described herein may be implemented in a digital electronic circuit system, an integrated circuit system, a field programmable gate array (FPGA), an application specific integrated circuit (ASIC), a special standard product (ASSP), a system on chip (SOC), a load programmable logic device (CPLD), a computer hardware, firmware, software and/or combinations thereof. These various embodiments may be implemented by one or more computer programs executable and/or interpretable on a programmable system including at least one programmable processor. The programmable processor may be a dedicated or general-purpose programmable processor, which may receive data and instructions from the storage system, the at least one input device and the at least one output device, and may transmit the data and instructions to the storage system, the at least one input device, and the at least one output device.

Program code for implementing the method of the present disclosure may be written in any combination of one or more programming language. The program code may be provided to a processor or controller of a general-purpose computer, a dedicated-purpose computer or other programmable data processing device, and the program code, when executed by the processor or controller, may cause the processor or controller to implement functions/operations specified in the flow chart and/or block diagram. The program code may be executed completely on a machine, partially on the machine, partially on the machine and partially on a remote machine as a separate software package, or completely on the remote machine or the server.

In the context of the present disclosure, the machine-readable medium may be a tangible medium that may contain or store a program for use by or in combination with an instruction execution system, a device or an apparatus. The machine-readable medium may be a machine-readable signal medium or a machine-readable storage medium. The machine-readable medium may include, but are not limited to, an electronic, magnetic, optical, electromagnetic, infrared, or semiconductor system, apparatus or device, or any suitable combination thereof. More specific examples of machine-readable storage media may include an electrical connection based on one or more lines, a portable computer disk, a hard disk, a random access memory (RAM), a read only memory (ROM), an erasable programmable read only memory (EPROM or a flash memory), an optical fiber, a portable compact disk read only memory (CD-ROM), an optical storage device, a magnetic storage device or any suitable combination thereof.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

A computer system may include a client and a server. The client and the server are generally far away from each other and usually interact through a communication network. The relationship between the client and the server is generated through computer programs running on the corresponding computers and having a client-server relationship with each other. The server may be a cloud server, also known as a cloud computing server or virtual host, which is a host product in the cloud computing service system to solve the defects of difficult management and weak business scalability in the traditional physical host and VPS service ("Virtual Private Server", or "VPS"). The server may also be a server of distributed system or a server combined with blockchain.

In the technical solution of the present disclosure, a collection, storage, use, processing, transmission, provision, and disclosure of pedestrian data involved comply with the provisions of relevant laws and regulations, take essential confidentiality measures, and do not violate public order and good customs.

In the technical solution of the present disclosure, authorization or consent is obtained from the user before the user's personal information is obtained or collected.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method of adjusting a driving strategy for a driverless vehicle, comprising:
detecting (S210) an emotion of at least one pedestrian in response to the at least one pedestrian being detected within a preset range in front of the driverless vehicle; and
adjusting (S220) a current driving strategy for the driverless vehicle based on a specified emotion in response to detecting that the at least one pedestrian comprises a target pedestrian exhibiting the specified emotion.

2. The method of claim 1, further comprising: before adjusting (S220) the current driving strategy for the driverless vehicle based on the specified emotion,
detecting (S340) whether the target pedestrian is watching the driverless vehicle,
wherein the current driving strategy for the driverless vehicle is adjusted (S220) based on the specified emotion in response to detecting that the target pedestrian is watching the driverless vehicle.

3. The method of claim 2, further comprising:
detecting (S350) whether the target pedestrian is a visually impaired person in response to detecting that the target pedestrian is not watching the driverless vehicle, wherein the current driving strategy for the driverless vehicle is adjusted (S220) based on the specified emotion in response to detecting that the target pedestrian is the visually impaired person.

4. The method of any one of claims 1 to 3, wherein the adjusting a current driving strategy for the driverless vehicle based on a specified emotion comprises at least one of:
controlling the driverless vehicle to change lanes to a side away from the target pedestrian in response to the specified emotion indicating that the target pedestrian feels afraid of the driverless vehicle; or
controlling the driverless vehicle to accelerate to pass (S3130), or controlling the driverless vehicle to stop and signal the pedestrian to go first (S3120), in response to the specified emotion indicating that the target pedestrian feels anxious.

5. The method of claim 4, wherein the controlling the driverless vehicle to change lanes to a side away from the target pedestrian comprises at least one of:
controlling the driverless vehicle to change (S380) lanes to the side away from the target pedestrian only, in response to a speed of the driverless vehicle being equal to a minimum speed limit; or
controlling the driverless vehicle to decelerate (S390) and change lanes to the side away from the target pedestrian in response to the speed of the driverless vehicle being greater than the minimum speed limit.

6. The method of claim 4, wherein the controlling the driverless vehicle to accelerate to pass or controlling the driverless vehicle to stop and signal the pedestrian to go first comprises:
controlling the driverless vehicle to accelerate to pass (S3130) in response to a speed of the driverless vehicle being less than a maximum speed limit; or
controlling the driverless vehicle to stop (S3120) and signal the pedestrian to go first in response to the speed of the driverless vehicle being equal to the maximum speed limit.

7. The method of any one of claims 1 to 6, wherein the detecting an emotion of at least one pedestrian comprises:
detecting the emotion of the at least one pedestrian based on image data captured by the driverless vehicle and/or data reported by a personal wearable device of the at least one pedestrian.

8. An apparatus of adjusting a driving strategy for a driverless vehicle, comprising:
a first detection module (410) configured to detect an emotion of at least one pedestrian in response to the at least one pedestrian being detected within a preset range in front of the driverless vehicle; and
an adjustment module (420) configured to adjust a current driving strategy for the driverless vehicle based on a specified emotion in response to detecting that the at least one pedestrian comprises a target pedestrian exhibiting the specified emotion.

9. The apparatus of claim 8, further comprising: a second detection module configured to: before the current driving strategy for the driverless vehicle is adjusted by the adjustment module (420) based on the specified emotion,
detect whether the target pedestrian is watching the driverless vehicle,
wherein the current driving strategy for the driverless vehicle is adjusted by the adjustment module (420) based on the specified emotion in response to the second detection module detecting that the target pedestrian is watching the driverless vehicle.

10. The apparatus of claim 9, further comprising:
a third detection module configured to detect whether the target pedestrian is a visually impaired person in response to the second detection module detecting that the target pedestrian is not watching the driverless vehicle, wherein the current driving strategy for the driverless vehicle is adjusted by the adjustment module (420) based on the specified emotion in response to the third detection module detecting that the target pedestrian is the visually impaired person.

11. The apparatus of any one of claims 8 to 10, wherein the adjustment module (420) is configured to perform a corresponding operation by at least one of:
a first control unit configured to control the driverless vehicle to change lanes to a side away from the target pedestrian in response to the specified emotion indicating that the target pedestrian feels afraid of the driverless vehicle; or
a second control unit configured to control the driverless vehicle to accelerate to pass, or control the driverless vehicle to stop and signal the pedestrian to go first, in response to the specified emotion indicating that the target pedestrian feels anxious,
wherein the first control unit is configured to perform at least one of:
controlling the driverless vehicle to change lanes to the side away from the target pedestrian only, in response to a speed of the driverless vehicle being equal to a minimum speed limit; or
controlling the driverless vehicle to decelerate and change lanes to the side away from the target pedestrian in response to the speed of the driverless vehicle being greater than the minimum speed limit,
wherein the second control unit is further configured to:
control the driverless vehicle to accelerate to pass in response to a speed of the driverless vehicle being less than a maximum speed limit; or
control the driverless vehicle to stop and signal the pedestrian to go first in response to the speed of the driverless vehicle being equal to the maximum speed limit.

12. The apparatus of claim 8, wherein the first detection module is further configured to:
detect the emotion of the at least one pedestrian based on image data captured by the driverless vehicle and/or data reported by a personal wearable device of the at least one pedestrian.

13. An electronic device, comprising:
at least one processor; and
a memory communicatively connected to the at least one processor, wherein the memory stores instructions executable by the at least one processor, and the instructions, when executed by the at least one processor, cause the at least one processor to implement the method of any one of claims 1 to 7.

14. A non-transitory computer-readable storage medium having computer instructions stored thereon, wherein the computer instructions allow a computer to implement the method of any one of claims 1 to 7.

15. A computer program product containing a computer program, wherein the computer program, when executed by a processor, is allowed to implement the method of any one of claims 1 to 7.
